# FASCICULE DE BREVET EUROPEEN

(11) **EP 1 152 169 B1**
(45) Date de publication et mention de la délivrance du brevet: **09.11.2005**
(21) Numéro de dépôt: 01401116.7
(22) Date de dépôt: 27.04.2001
(51) Int. Cl.: F16H 48/08, B23B 5/40

(54) **Procédé pour l'usinage de la cage du différentiel d'un véhicule et dispositif pour sa mise en oeuvre**
Verfahren zur Bearbeitung von Differentialgehäuse und Vorrichtung zur Durchführung dieses Verfahren
Fabrication method of vehicle differential housing and device therefore

(30) Priorité: 28.04.2000 ES 200001093
(43) Date de publication de la demande: 07.11.2001
(73) Titulaire: Danobat, S. Coop., 28070 Elgoibar (Guipuzcoa) (ES)
(72) Inventeur: Andonegui Milikua, Javier, 20870 Elgoibar, Guipuzcoa (ES)
(74) Mandataire: Joly, Jean-Jacques

(56) Documents cités:
- DE-A- 3 042 400
- GB-A- 917 132
- GB-A- 968 855
- PATENT ABSTRACTS OF JAPAN vol. 007, no. 029 (M-191), 5 février 1983 (1983-02-05) & JP 57 184601 A (NISSAN JIDOSHA KK), 13 novembre 1982 (1982-11-13)

## Description

La cage du différentiel d'un véhicule connue sous la désignation de " boîtier différentiel " ou " differential housing " est une pièce dans laquelle il est fondamental d'obtenir la précision maximale puisque au point central d'intersection de trois axes théoriques, dont l'un correspond à celui de la conformation sphérique intérieure de la cage du différentiel elle-même, le deuxième est l'axe des satellites et le troisième est celui des demi-arbres ou paliers.

Avec les solutions d'usinage actuelles, le point d'intersection de ces trois axes est situé dans une sphère théorique d'un diamètre compris entre six et huit centièmes de millimètres, c'est-à-dire que l'écart entre le point d'intersection des trois axes précités et du zéro central théorique est compris entre ± 3-4 centièmes de millimètre.

Bien que ce soit là une haute précision, étant donné qu'il s'agit, pour la cage du différentiel, d'une pièce de base dans l'automobile sous l'aspect de sa sécurité et de son fonctionnement, les constructeurs d'automobiles s'efforcent de faire en sorte que cette précision soit toujours meilleure mais, jusqu'à ce jour, les procédés d'usinage connus ne permettent pas de l'améliorer.

En effet, dans les procédés d'usinage connus jusqu'à présent, il existe les solutions suivantes :

### SOLUTION A.

Dans une première opération, on usine l'intérieur des orifices pour les paliers. De même, on aura usiné les orifices de la collerette où se fixera par boulonnage la couronne de la cage de différentiel qui sera entraînée par le pignon de l'extrémité de l'arbre de transmission correspondant si la cage de différentiel adopte cette solution.

Dans une deuxième opération, on usine les orifices pour les axes des satellites.

Finalement, et en tirant parti des logements des paliers, on introduit dans chacun d'eux un mandrin de centrage, ces mandrins appartenant à un dispositif de fixation double et hydraulique et étant complétés par un troisième mandrin de fixation formé d'un cylindre de fixation à double piston qui pénètre dans l'un des orifices pour les satellites.

Ce troisième mandrin se place entre les deux autres, dans une direction perpendiculaire à ceux-ci, et comprend des appuis sur lesquels reposent les parties extérieures des logements des paliers.

Avec la pièce ainsi disposée, on procède à l'usinage de sa sphère intérieure tournée sphérique, constituant la pièce statique.

### SOLUTION B

C'est une variante du procédé précédent et consiste à exécuter le tournage de la sphère avec la pièce en rotation. Pour cela, on dispose, dans les mâchoires d'un tour, deux tétons qui s'introduisent dans les logements des axes des satellites qui auront été préalablement usinés.

Avec la pièce ainsi disposée, on procède, au moyen des mâchoires du tour, à faire tourner la pièce en usinant la sphère intérieure avec la pièce en rotation. Ce procédé permet une meilleure réalisation de la sphère intérieure.

### SOLUTION C

La pièce est fixée par l'extérieur des logements de paliers et on bloque et usine la sphère intérieure.

Cette opération s'effectue avec une machine qui comprend deux unités de mandrinage qui, lorsqu'on a terminé d'usiner la sphère, s'abaissent et usinent les deux orifices prévus pour les axes des satellites.

Cette solution n'exige que deux bridages ou fixations mais la précision n'est pas optimale parce que les deux unités de mandrinage sont indépendantes, bien qu'elles soient fixées au chariot de la machine.

Dans cette solution, il existe une variante selon laquelle les deux unités de mandrinage sont fixées au bâti de la machine et non pas au chariot. Dans ce cas, et en supposant encore que la fixation soit précise, étant donné qu'il s'agit de tours verticaux, les dilatations et contractions de la tête affectent le positionnement des unités de mandrinage.

Dans chaque cas, les procédés traditionnels exigent, pour l'usinage de la sphère intérieure de la cage du différentiel et des orifices des satellites, trois ou deux fixations successives de la pièce et on n'était jamais parvenu jusqu'à présent à réaliser cet usinage de la cage de différentiel avec une seule fixation.

Il est évident que le fait d'avoir à retirer la pièce et à la fixer de nouveau fait perdre de la précision de l'usinage mais, jusqu'à ce jour, on n'avait pas encore obtenu une solution qui évite les fixations successives.

Le document DE 30 42 400 qui est considéré comme l'état de la technique le plus proche, décrit un procédé pour l'usinage d'une sphère intérieure dans une pièce telle que la cage du différentiel d'un véhicule. Selon ce procédé, la cage est introduite, soit par des moyens automatisés soit manuellement, dans la zone de travail de la machine d'usinage, elle est maintenue par des moyens de serrage et ensuite on usine la forme sphérique voulue. Ce document DE 30 42 400 ne donne pas de renseignement détaillé quant à la façon dont la cage du différentiel est retenue lors de l'usinage de sa sphère intérieure ni quant à l'usinage des orifices pour les axes des satellites et des orifices pour les paliers.

Selon la solution préconisée maintenant, l'usinage de la cage de différentiel s'effectue avec une unique fixation, selon le procédé suivant :
- On monte la pièce sur un plateau diviseur de la tête d'un tour, en centrant et en fixant la pièce, en se servant de l'intérieur d'un des logements des paliers ou de l'extérieur de ce logement, c'est-à-dire de la zone dans laquelle se placent les roulements correspondants.
- Avec la pièce ainsi disposée, on procède en premier lieu à l'usinage de la sphère intérieure.
- Ensuite, et en maintenant la pièce telle qu'elle est fixée et centrée, on procède à la tourner de 90° jusqu'à la placer de manière qu'on usine l'un des orifices des axes des satellites.
- Finalement, on tourne la pièce de 180° et on usine l'autre orifice des axes des satellites.

De cette façon, avec une seule fixation, on peut usiner la sphère intérieure et les orifices des satellites, en obtenant ainsi une précision supérieure à celle qu'on obtient avec les solutions traditionnelles.

On a prévu que, dans une variante du procédé déjà indiqué, une fois qu'on a usiné la sphère intérieure et qu'on a tourné la pièce de 90° pour la placer correctement pour usiner l'un des orifices des satellites, cet usinage s'effectue avec un outil qui passe jusqu'à l'autre côté de la pièce ; de sorte qu'en une seule opération, on usine les deux orifices des satellites.

Pour obtenir tout cela, on a conçu une pièce que nous appellerons cloche et qui présente au moins deux grandes ouvertures opposées pour permettre le chargement de la pièce dans la machine et l'usinage de la sphère intérieure.

Entre ces deux grandes ouvertures, la cloche présente des orifices traversants et opposés respectifs, pour permettre la passage, à travers ces orifices, de l'outil qui a à usiner les logements pour les axes des satellites.

Cette cloche établit une poussée axiale contre la cage de différentiel, en complétant ainsi la fixation déjà décrite de la cage de différentiel qui s'effectue par l'intérieur ou par l'extérieur d'un des deux logements des paliers.
La figure 1 montre une vue en coupe d'une cage de différentiel (1).

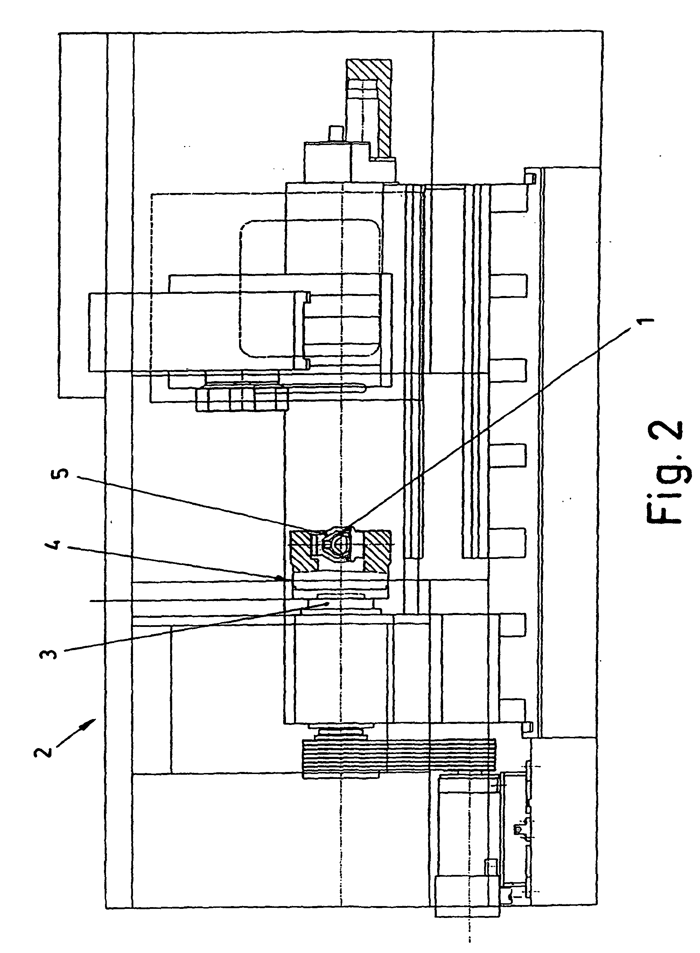

La figure 2 est une vue schématique d'une machine-outil (2) préparée pour mettre en oeuvre le procédé objet de la présente invention.
La figure 3 est une vue en perspective d'une pièce que nous appellerons cloche (5).
Les figures 4, 5 et 6 sont des vues en élévation, de profil et en plan de dessus, de la cloche (5).
La figure 7 est une vue agrandie de la partie de la tête (3) dans laquelle on monte la cage du différentiel (1) pour son usinage.
La figure 8 est une vue agrandie et partiellement en coupe de la figure 7 pour permettre de se rendre compte de la fixation de la cage de différentiel (1) par l'intérieur d'un des logements (1.1) des paliers.
La figure 9 est une vue comme celle de la figure 8 mais, maintenant, avec la fixation de la cage de différentiel (1) par l'extérieur d'un des logements (1.1.).

L'objet de la présente invention est un procédé pour l'usinage de la cage de différentiel (1) d'un véhicule et le dispositif pour mettre en oeuvre ledit procédé.

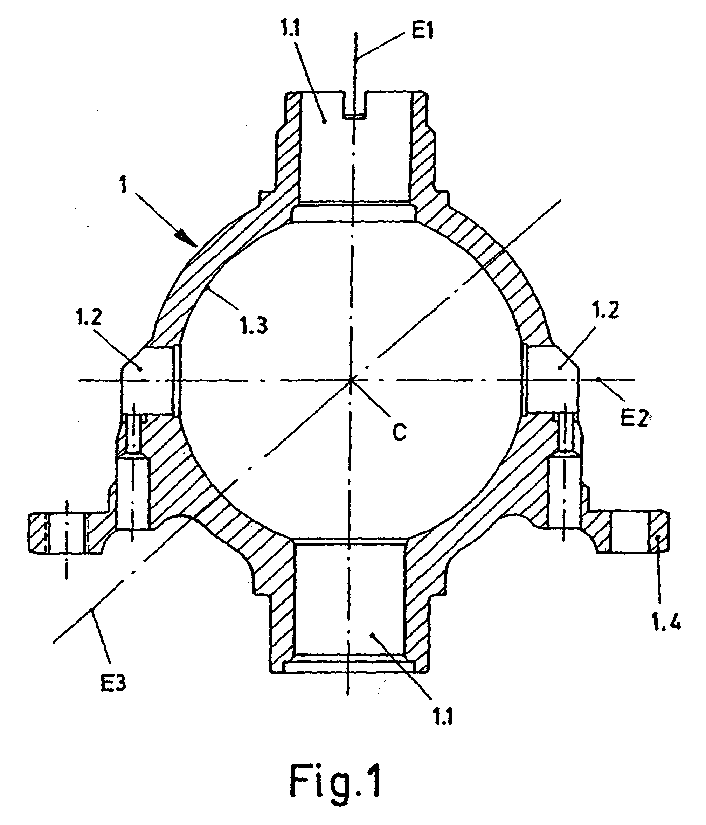

Comme on peut le voir sur la figure 1, la cage de différentiel (1) d'un véhicule présente deux orifices (1.1) opposés face à face pour le logement des demi-arbres ou paliers. Elle présente aussi deux orifices opposés face à face (1.2) pour les axes des satellites et elle doit présenter une conformation intérieure sphérique (1.3). Sur l'extérieur de la cage de différentiel (1), est formée une collerette (1.4) qui, dans certains cas, possède des orifices pour la fixation de la couronne qui reçoit le mouvement du pignon disposé à une extrémité de l'arbre de transmission correspondant.

Pour que la cage de différentiel ait un fonctionnement optimal, on devrait obtenir que le point d'intersection " C " de l'axe (E1) des orifices (1.1), de l'axe (E2) des orifices (1.2) et d'un axe (E3) de la sphère intérieure (1.3) se coupent en un même point qui doit être le point central.

En réalité, on n'obtient pas ce résultat et ledit point d'intersection se trouve à l'intérieur d'une sphère théorique d'un diamètre compris entre six et huit centièmes de millimètre.

Les tentatives faites pour augmenter la précision ont buté jusqu'à présent sur le fait que, pour exécuter l'usinage de la cage de différentiel (1), il est nécessaire de centrer et de fixer cette dernière et ses moyens de fixation qui, par exemple, permettaient de tourner la sphère intérieure, faisaient obstacle à l'usinage des orifices (1.2), puisqu'il était nécessaire de retirer la pièce (1) et de la refixer dans une nouvelle position.

Ces fixations successives, qui, selon les solutions connues, étaient au nombre de deux ou de trois, empêchaient d'améliorer la précision finale au-delà de tolérances de l'ordre des six à huit centièmes de millimètre.

Avec la solution préconisée maintenant, on parvient à effectuer ledit usinage avec une seule fixation de la pièce (1), grâce à l'emploi d'une machine-outil (2) et, plus concrètement, d'un tour, sur la tête (3) duquel, plus concrètement sur la partie dénommée broche de la tête (3), on dispose un plateau diviseur (4) sur lequel on monte la cage de différentiel (1) qu'il s'agit d'usiner, avec la particularité de l'utilisation d'une pièce, en forme de cloche (5) présentant un dessin spécial.

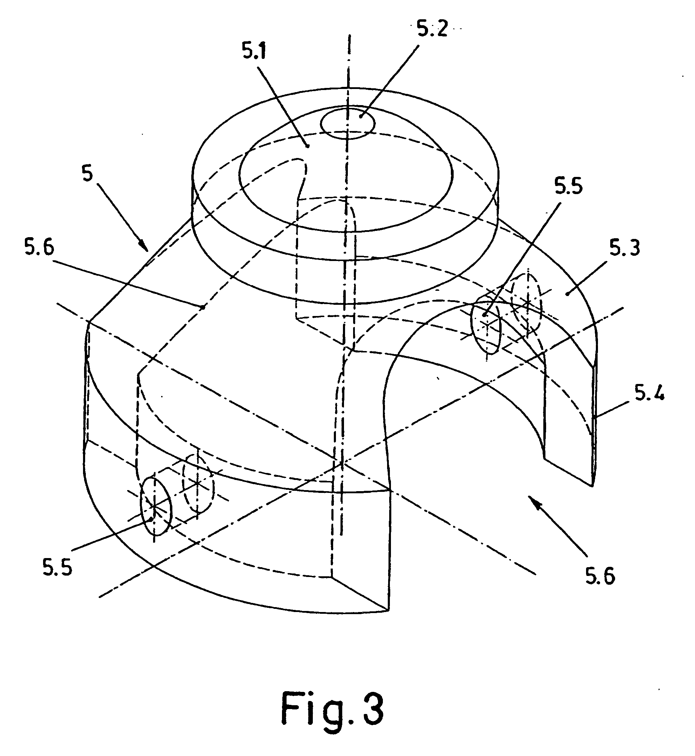

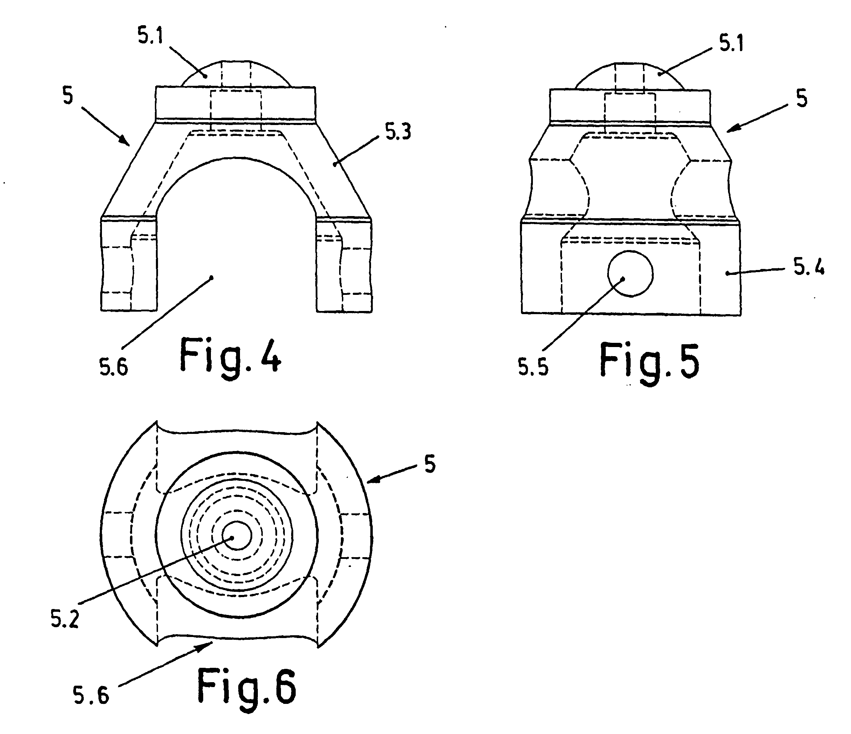

Comme on s'en rend compte sur les figures 3, 4, 5 et 6, la cloche (5) est constituée par une pièce unique qui présente une calotte (5.1) où se trouve un orifice traversant (5.2). La cloche (5) s'évase, selon une configuration conique (5.3) pour se terminer par une partie cylindrique (5.4) dans laquelle se trouvent deux orifices traversants (5.5) diamétralement opposés et, entre ces orifices, et également dans des positions opposées, deux grandes ouvertures (5.6).

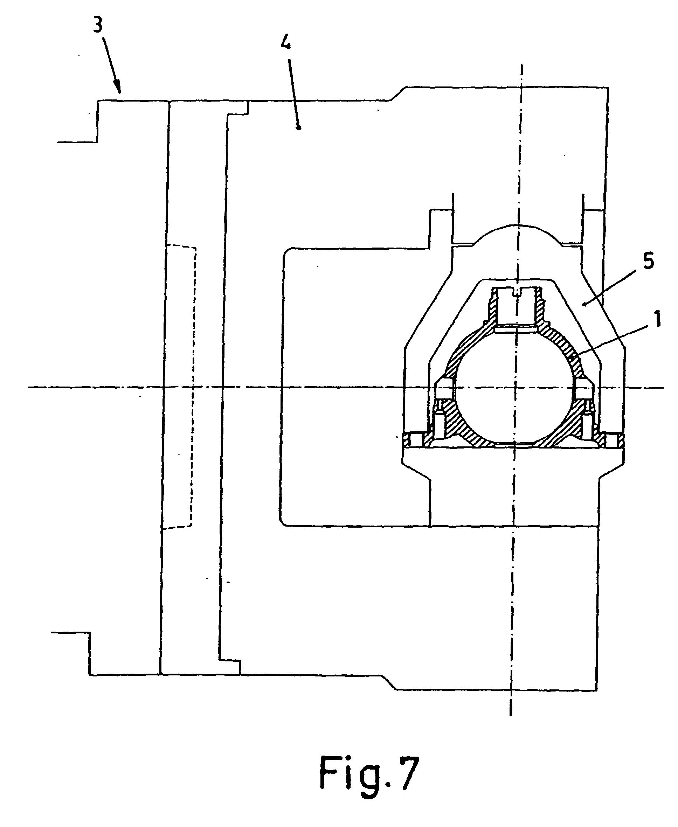

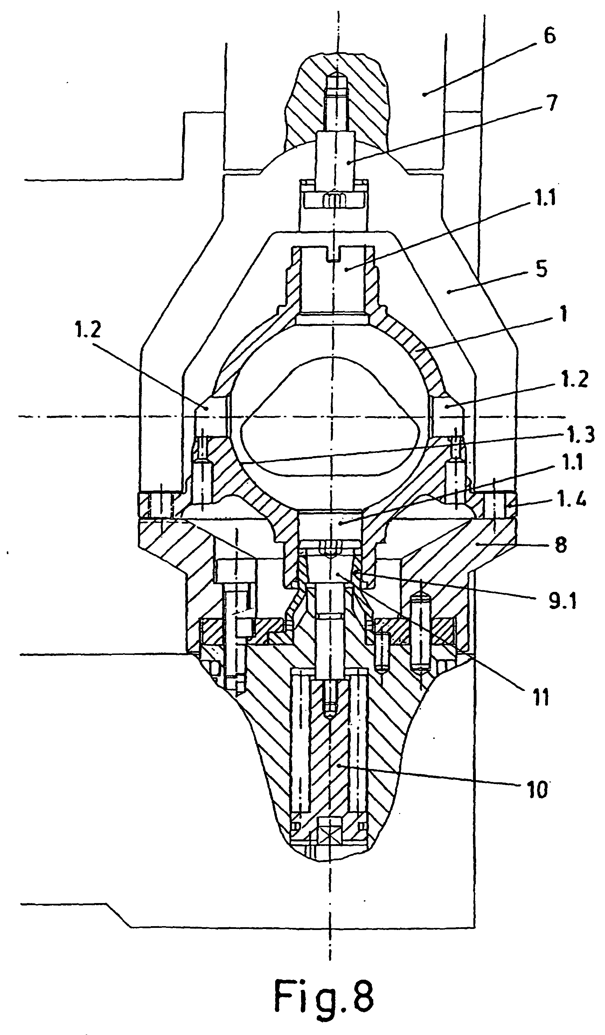

Dans le détail de la figure 7, on peut voir comment la cage de différentiel (1) est disposée par rapport à la cloche (5) ; tandis que, dans la vue agrandie et en coupe de la figure 8, on peut voir le montage de la cloche (5) au moyen d'une vis centrale (7) qui se visse dans la partie (6) en passant par l'orifice (5.2) de la cloche (5).

De même, sur la figure 8, on peut voir comment est le montage de la cage de différentiel (1), selon lequel, à l'intérieur d'un des orifices (1.1) des paliers, on introduit une pince (9.1) reliée à une pièce (11) solidaire du piston (10) d'un cylindre.

Dans la position d'avance du piston (10), la pièce (11) n'agit pas. Dans la position de retrait du piston (10), la pièce (11), en agissant par sa conicité extérieure, ouvre la pince (9.1) qui centre et fixe la cage de différentiel (1) à l'intérieur de l'orifice (1.1).

De cette façon, la cage de différentiel (1) reste centrée et fixée en s'appuyant contre le plateau (8). Dans cette position, la cloche (5) exerce une poussée axiale contre la collerette (1.4) de la cage de différentiel (1), en coopérant ainsi à sa fixation.

Pour procéder au montage de la cage de différentiel (1) dans la machine (2), le robot de cette machine prend la cage de différentiel (1) et, à travers les grandes ouvertures (5.6) de la cloche (5), dispose la cage de différentiel (1) dans une position de montage, et à ce moment, les moyens de centrage et de fixation (9.1, 10 et 11) entrent en action, de même que la cloche (5) qui presse axialement la cage de différentiel (1) ; de sorte que cette dernière est parfaitement centrée et fixée.

Avec la cage de différentiel (1) ainsi disposée, on procède en premier lieu, à l'usinage de la sphère intérieure (1.3). Pour effectuer cet usinage, on se sert de nouveau des grandes ouvertures (5.6) de la cloche (5), de sorte que l'outil d'usinage passe à travers lesdites ouvertures (5.6).

Lorsqu'on a usiné la sphère intérieure (1.3), en maintenant la cage de différentiel centrée et fixée, on la tourne de 90°, de manière que, maintenant, on usine l'un des orifices (1.2) des satellites.

Après l'exécution de l'usinage de l'un des orifices (1.2), on tourne la cage de différentiel de 180° et on usine l'autre orifice (1.2). L'usinage des orifices (1.2) s'effectue en faisant passer l'outil par les orifices (5.5) de la cloche (5).

On a prévu, comme variante du procédé décrit que, alors qu'avec l'outil approprié, on peut usiner, dans une seule opération, les deux orifices (1.2) de la cage de différentiel (1). C'est-à-dire que, lorsqu'on a terminé l'usinage de la sphère intérieure (1.3) et qu'on a tourné la cage de différentiel (1) de 90° de façon à la disposer pour procéder à l'usinage de l'un de ses orifices (1.2), alors que l'outil passe à l'intérieur de la cage de différentiel (1) jusqu'à l'autre côté de celle-ci, en usinant ainsi dans la même opération l'autre orifice (1.2).

Dans chaque cas, et conformément à la présente invention, on usine la sphère intérieure (1.3) et les orifices (1.2) de la cage de différentiel (1) sans avoir à retirer la cage (1) à aucun moment, et avec une seule fixation de la cage (1), ce qui permet d'améliorer la précision de l'usinage.

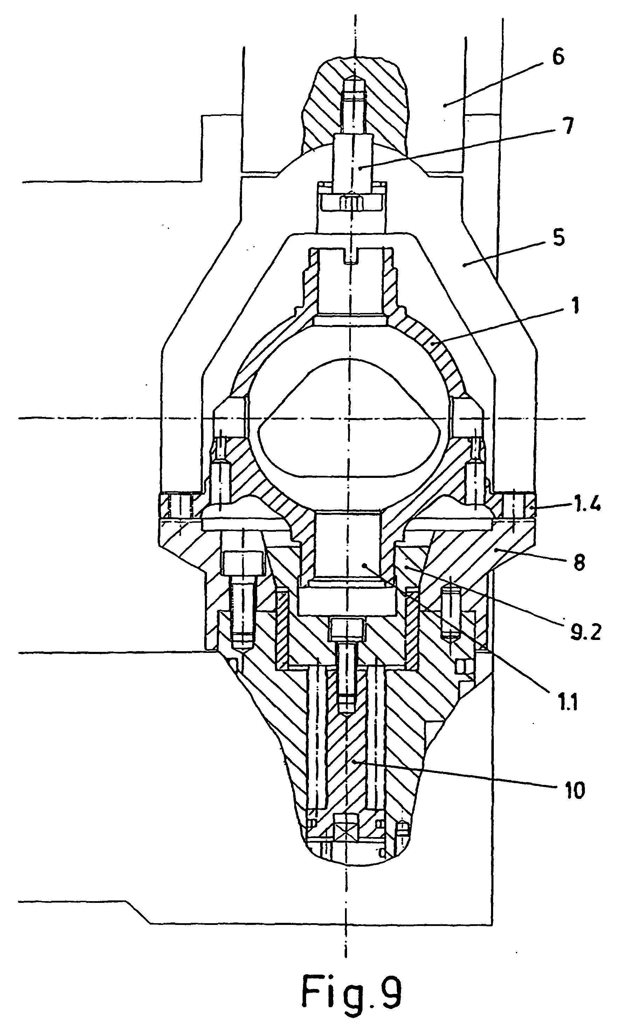

Sur la figure 9, on a représenté une variante du dispositif de fixation de la cage de différentiel (1), selon laquelle, maintenant, on centre et on fixe cette cage, en agissant de l'extérieur de l'orifice (1.1) juste dans la zone d'appui du roulement correspondant de la cage (1).

Comme on peut le voir sur la figure 9, on utilise ici aussi une pince (9.2) qui, dans sa partie extérieure, présente une conicité correspondante à celle d'un logement central du plateau (8), de sorte qu'en fonction du positionnement du piston (10), les conicités de la pince (9.2) et du logement central du plateau (8) établiront la fermeture et l'ouverture de la pince (9.2) et, avec ces mouvements, la fixation ou la libération de la cage de différentiel (1).

Il est évident que le fait que le centrage et la fixation de la cage de différentiel (1) s'effectuent par l'intérieur ou par l'extérieur de l'orifice (1.1) ne change rien au principe de l'invention, pas plus que le changement des mécanismes de fixation ne l'altère, puisque les pinces (9.1 et 9.2) peuvent adopter n'importe quelle autre réalisation classique, qui permet le centrage et la fixation de la cage de différentiel (1) sans modifier le principe fondamental de la présente invention qui réside dans le fait de pouvoir usiner la cage de différentiel (1) avec une unique fixation de cette dernière.

Dans ce même sens, la réalisation représentée de la cloche (5) ne doit être entendue que comme un exemple de réalisation pratique, non limitatif puisqu'en conservant le principe d'une configuration générale en forme de cloche, qui se fixe par sa partie la pus étroite et qui possède des ouvertures (5.6) destinées à rendre possible le chargement de la cage de différentiel (1) et à permettre l'usinage de sa sphère intérieure (1.3), ainsi que des orifices ou ouvertures (5.5) destinés à permettre l'usinage des orifices (1.2) des satellites, on peut adopter plusieurs dessins extérieurs de la cloche (5), qui n'altéreraient en aucune façon sa fonctionnalité essentielle qui réside dans le fait de permettre le montage et la fixation de la cage de différentiel (1), ainsi que son usinage, avec une seule fixation de ladite cage (1).

## Revendications

1. Procédé pour l'usinage de la cage de différentiel d'un véhicule, qui comporte les étapes consistant à :
prévoir une machine (2) comportant un robot et un plateau diviseur (4) disposé sur la broche d'une tête (3) de la machine (2) ;
en premier lieu, et au moyen du robot correspondant de la machine (2), monter la cage de différentiel (1) sur le plateau diviseur (4) ; et **caractérisé par** les étapes suivantes:
ensuite, centrer et fixer la cage de différentiel (1) au travers d'un des deux orifices (1.1) que cette cage possède pour les paliers, en fixant axialement la cage de différentiel (1) au moyen de la poussée axiale d'une cloche (5) ;
avec la cage de différentiel (1) déjà centrée et fixée, procéder à l'usinage de sa sphère intérieure (1.3) au travers d'ouvertures (5.6) de la cloche (5) ; et
lorsqu'on a usiné la sphère intérieure (1.3), tourner la cage de différentiel de 90° et usiner un des orifices (1.2) des satellites au travers de l'un d'une paire d'orifices (5.5) mutuellement opposés de la cloche (5) pour, finalement, tourner la cage (1) de 180° et usiner l'orifice (1.2) opposé, cet usinage de la cage (1) s'effectuant ainsi avec une seule fixation de la cage de différentiel (1).

2. Procédé pour l'usinage de la cage de différentiel d'un véhicule, entièrement en accord avec la première revendication, **caractérisé en ce qu'**on a prévu qu'une fois usinée la sphère intérieure (1.3) et une fois la cage de différentiel (1) tournée de 90°, pour procéder à l'usinage d'un des orifices (1.2) des satellites, l'outil passe par l'intérieur de la cage de différentiel (1), usinant, simultanément et en une seule opération, l'autre orifice opposé (1.2) de la cage de différentiel (1).

3. Procédé pour l'usinage de la cage de différentiel d'un véhicule, entièrement en accord avec la première revendication, **caractérisé en ce que** le centrage et la fixation de la cage de différentiel (1) s'effectuent par intérieur d'un des deux orifices (1.1) des paliers.

4. Procédé pour l'usinage de la cage de différentiel d'un véhicule, entièrement en accord avec la première revendication, **caractérisé en ce que** le centrage et la fixation de la cage de différentiel (1) s'effectuent par l'extérieur d'un des deux orifices (1.1) des paliers.

5. Dispositif pour la mise en oeuvre du procédé de l'une quelconque des revendications 1 à 4, ledit dispositif étant constitué par un plateau diviseur (4) disposé sur la broche de la tête (3) d'une machine (2) et **caractérisé en ce que** ledit dispositif comprend une pièce cloche (5), cette dernière présentant des grandes ouvertures (5.6) pour permettre le montage de la cage de différentiel (1) dans la machine (2) et l'usinage de sa sphère intérieure (1.3), ainsi que des orifices (5.5) opposés, pour permettre le passage de l'outil d'usinage des orifices (1.2) des satellites.

6. Dispositif pour l'usinage de la cage de différentiel d'un véhicule, entièrement en accord avec la cinquième revendication, **caractérisé en ce que** les moyens de centrage et de fixation de la cage de différentiel (1), lorsqu'ils agissent par l'intérieur d'un des deux orifices des paliers (1.1) sont constitués par une pince à cône (9.1) qui peut être actionnée par l'action d'un piston (10).

7. Dispositif pour l'usinage de la cage de différentiel d'un véhicule, entièrement en accord avec la cinquième revendication, **caractérisé en ce que** les moyens de centrage et de fixation de la cage de différentiel (1), lorsqu'ils agissent par l'extérieur d'un des deux orifices des paliers (1.1) sont constitués par une pince à cône (9.2) qui peut être actionnée par l'action d'un piston (10).

## Patentansprüche

1. Verfahren zur Bearbeitung des Ausgleichgehäuses eines Fahrzeuges, das die Schritte umfaßt, die darin bestehen:
eine Maschine (2) vorzusehen, die einen Roboter und einen schaltenden Rundtisch (4), welcher an der Spindel eines Kopfes (3) der Maschine (2) angeordnet ist, umfaßt;
zuerst mit Hilfe des entsprechenden Roboters der Maschine (2) das Ausgleichgehäuse (1) an dem schaltenden Rundtisch (4) anzubringen,
und das durch die folgenden Schritte **gekennzeichnet** ist:
anschließend das Ausgleichgehäuse (1) über eine der beiden Öffnungen (1.1), die dieses Gehäuse für die Lager aufweist, zu zentrieren und zu befestigen, indem das Ausgleichgehäuse (1) mittels des axialen Schubs einer Glocke (5) axial befestigt wird;
mit dem bereits zentrierten und befestigten Ausgleichgehäuse (1) die Bearbeitung seines Innenbereichs (1.3) über Öffnungen (5.6) der Glocke (5) zu vollziehen; und
dann, wenn der Innenbereich (1.3) bearbeitet ist, das Ausgleichgehäuse um 90° zu drehen und eine der Öffnungen (1.2) der Kegelräder über die eine Öffnung eines Paares von einander gegenüberüegenden Öffnungen (5.5) der Glocke (5) zu bearbeiten, um schließlich das Gehäuse (1) um 180° zu drehen und die gegenüberliegende Öffnung (1.2) zu bearbeiten, wobei diese Bearbeitung des Gehäuses (1) auf diese Weise mit einer einzigen Befestigung des Ausgleichgehäuses (1) erfolgt.

2. Verfahren zur Bearbeitung des Ausgleichgehäuses eines Fahrzeuges, vollständig in Übereinstimmung mit dem ersten Anspruch, **dadurch gekennzeichnet, daß** vorgesehen wurde, daß sobald der Innenbereich (1.3) bearbeitet ist und sobald das Ausgleichgehäuse (1) um 90° gedreht wurde, um die Bearbeitung von einer der Öffnungen (1.2) der Kegelräder zu vollziehen, das Werkzeug über den Innenraum des Ausgleichgehäuses (1) läuft, wodurch gleichzeitig und in einem einzigen Arbeitsschritt die gegenüberliegende andere Öffnung (1.2) des Ausgleichgehäuses (1) bearbeitet wird.

3. Verfahren zur Bearbeitung des Ausgleichgehäuses eines Fahrzeuges, vollständig in Übereinstimmung mit dem ersten Anspruch, **dadurch gekennzeichnet, daß** das Zentrieren und das Befestigen des Ausgleichgehäuses (1) über die Innenseite von einer der beiden Öffnungen (1.1) der Lager erfolgen.

4. Verfahren zur Bearbeitung des Ausgleichgehäuses eines Fahrzeuges, vollständig in Übereinstimmung mit dem ersten Anspruch, **dadurch gekennzeichnet, daß** das Zentrieren und das Befestigen des Ausgleichgehäuses (1) über die Außenseite von einer der beiden Öffnungen (1.1) der Lager erfolgen.

5. Vorrichtung zur Durchführung des Verfahrens nach irgendeinem der Ansprüche 1 bis 4, wobei die Vorrichtung von einem schaltenden Rundtisch (4) gebildet ist, der an der Spindel des Kopfes (3) einer Maschine (2) angeordnet ist, und **dadurch gekennzeichnet ist, daß** die Vorrichtung ein Glockenteil (5) umfaßt, wobei letzteres große Öffnungen (5.6), um das Anbringen des Ausgleichgehäuses (1) in der Maschine (2) und die Bearbeitung seines Innenbereichs (1.3) zu ermöglichen, sowie gegenüberliegende Öffnungen (5.5) aufweist, um den Durchgang des Werkzeuges zur Bearbeitung der Öffnungen (1.2) der Kegelräder zu ermöglichen.

6. Vorrichtung für die Bearbeitung des Ausgleichgehäuses eines Fahrzeuges, vollständig in Übereinstimmung mit dem fünften Anspruch, **dadurch gekennzeichnet, daß** die Mittel zum Zentrieren und Befestigen des Ausgleichgehäuses (1), wenn sie über die Innenseite von einer der beiden Öffnungen der Lager (1.1) wirken, von einer Konusklemme (9.1) gebildet sind, die durch die Wirkung eines Kolbens (10) betätigt werden kann.

7. Vorrichtung für die Bearbeitung des Ausgleichgehäuses eines Fahrzeuges, vollständig in Übereinstimmung mit dem fünften Anspruch, **dadurch gekennzeichnet, daß** die Mittel zum Zentrieren und Befestigen des Ausgleichgehäuses (1), wenn sie über die Außenseite von einer der beiden Öffnungen der Lager (1.1) wirken, von einer Konusklemme (9.2) gebildet sind, welche durch die Wirkung eines Kolbens (10) betätigt werden kann.

## Claims

1. Method for machining the differential gearcase of a vehicle, which comprises the steps consisting of:
providing a machine (2) comprising a robot and a dividing plate (4) placed on the spindle of a head (3) of the machine (2);
initially, and by means of the corresponding robot of the machine (2), mounting the differential gearcase (1) on the dividing plate (4); and
**characterized by** the following steps:
then, centring and attaching the differential gearcase (1) through one of the two orifices (1.1) that this gearcase possesses for the bearings, and attaching the differential gearcase (1) axially by means of the axial pressure of a bell piece (5);
with the differential gearcase (1) already centred and attached, machining its inner sphere (1.3) through openings (5.6) in the bell piece (5); and
when the inner sphere (1.3) has been machined, turning the differential gearcase through 90° and machining one of the orifices (1.2) of the satellite gears through one of a pair of orifices (5.5) of the bell piece (5) that are facing one another in order, finally, to rotate the gearcase (1) through 180° and machine the opposite orifice (1.2), this machining of the gearcase (1) being performed therefore with a single attachment of the differential gearcase (1).

2. Method for machining the differential gearcase of a vehicle, fully compliant with the first claim, **characterized in that** provision has been made that, once the inner sphere (1.3) has been machined and once the differential gearcase (1) has been rotated through 90°, in order to machine one of the orifices (1.2) of the satellite gears, the tool moves into the interior of the differential gearcase (1), simultaneously and in a single operation machining the other opposite orifice (1.2) of the differential gearcase (1).

3. Method for machining the differential gearcase of a vehicle, fully compliant with the first claim, **characterized in that** the differential gearcase (1) is centred and attached via the inside of one of the two orifices (1.1) of the bearings.

4. Method for machining the differential gearcase of a vehicle, fully compliant with the first claim, **characterized in that** the differential gearcase (1) is centred and attached via the outside of one of the two orifices (1.1) of the bearings.

5. Device for using the method of any one of Claims 1 to 4, the said device consisting of a dividing plate (4) placed on the spindle of the head (3) of a machine (2) and **characterized in that** the said device comprises a bell piece (5), the latter having large openings (5.6) to allow the differential gearcase (1) to be mounted in the machine (2) and its inner sphere (1.3), and the opposite orifices (5.5), to be machined so that the tool for machining the orifices (1.2) of the satellite gears can pass through.

6. Device for machining the differential gearcase of a vehicle, fully compliant with the fifth claim, **characterized in that** the means of centring and attaching the differential gearcase (1), when they operate inside one of the two orifices of the bearings (1.1), consist of a cone collet (9.1) which may be actuated by the action of a piston (10).

7. Device for machining the differential gearcase of a vehicle, fully compliant with the fifth claim, **characterized in that** the means of centring and attaching the differential gearcase (1), when they operate outside one of the two orifices of the bearings (1.1), consist of a cone collet (9.2) which may be actuated by the action of a piston (10).
